# EUROPÄISCHE PATENTSCHRIFT

(11) **EP 4 182 847 B1**
(45) Veröffentlichungstag und Bekanntmachung des Hinweises auf die Patenterteilung: **11.03.2026**
(21) Anmeldenummer: 21746680.4
(22) Anmeldetag: 16.07.2021
(51) Int. Cl.: G06K 19/077, G06K 19/07, G07D 7/01, G07D 7/12, B42D 25/23, B42D 25/305

(54) **LAMINATIONSKÖRPER MIT BELEUCHTETEM SICHERHEITSMERKMAL UND VERFAHREN ZU DESSEN VERIFIKATION**
LAMINATION ELEMENT WITH ILLUMINATED SECURITY FEATURE, AND METHOD FOR VERIFYING SAME
ÉLÉMENT DE STRATIFICATION À CARACTÉRISTIQUE DE SÉCURITÉ ÉCLAIRÉE ET SON PROCÉDÉ DE VÉRIFICATION

(30) Priorität: 17.07.2020 DE 102020209013
(43) Veröffentlichungstag der Anmeldung: 24.05.2023
(73) Patentinhaber: Bundesdruckerei GmbH, 10969 Berlin (DE)
(72) Erfinder: BIELESCH, Ulrich, 56132 Frücht (DE); RÖTZER, Martin, 85229 Markt Indersdorf (DE); MAUDERER, Michael, 81825 München (DE)
(74) Vertreter: Patentanwälte Bressel und Partner mbB
(86) Internationale Anmeldenummer: PCT/EP2021/069949
(87) Internationale Veröffentlichungsnummer: WO 2022/013419

(56) Entgegenhaltungen:
- DE-A1- 102005 039 320
- DE-A1- 102007 015 934
- DE-A1- 102011 117 044
- DE-A1- 102013 102 003
- US-A- 4 469 725

## Beschreibung

Die Erfindung betrifft einen Laminationskörper, insbesondere einen als Sicherheitsdokument oder Sicherheitsdokumentenrohling ausgebildeten Laminationskörper, der mit einem beleuchteten Sicherheitsmerkmal ausgebildet ist, und ein Verfahren zur Verifikation des beleuchteten Sicherheitsmerkmals in dem Laminationskörper.

Aus dem Stand der Technik ist es bekannt, Sicherheitsdokumente, beispielsweise Personalausweise, Identitätskarten, Führerscheine, in Pässe eingebundene Passkarten, Geldkarten, Telefonkarten, Zugangsberechtigungskarten, Firmenausweise usw., als Laminationskörper mit darin und daran ausgebildeten Sicherheitsmerkmalen auszubilden.

Ein Laminationskörper besteht hierbei aus einer Mehrzahl von selbsttragenden Substratschichten, die übereinandergeschichtet sind und miteinander zu dem Laminationskörper verbunden sind. In der Regel sind die Substratschichten in einem Hochdruck-Hochtemperatur-Laminationsverfahren miteinander verbunden. Für ein solches Verbindungsverfahren eignen sich insbesondere thermoplastische und teilweise auch thermoelastische Kunststoffschichten. Einzelne Schichten können hierbei auch aus anderen Materialien wie beispielsweise Fasermaterialien wie Papier oder ähnlichem hergestellt sein. Besonders bevorzugt werden jedoch Laminationskörper, bei denen die miteinander verbundenen selbsttragenden Substratschichten alle aus einem Kunststoffmaterial, besonders bevorzugt aus demselben Kunststoffmaterial bestehen, d. h. auf Basis desselben Polymers hergestellt sind.

Um die Echtheit und Unverfälschtheit eines solchen Laminationskörpers überprüfen zu können, d. h. verifizieren zu können, ob der Laminationskörper echt und unverfälscht ist, wird der Laminationskörper mit einem oder in der Regel mehreren Sicherheitsmerkmalen versehen.

Ein Sicherheitsmerkmal ist hierbei ein Merkmal, welches geeignet ist, die Echtheit und/oder Unverfälschtheit eines Gegenstands überprüfbar zu machen.

Ein Gegenstand, der mindestens ein Sicherheitsmerkmal umfasst, wird hier auch als Sicherheitselement bezeichnet.

Aus dem Stand der Technik sind viele verschiedene Sicherheitsmerkmale bekannt. Eine Reihe von Sicherheitsmerkmalen können optisch überprüft werden. Dies bedeutet, dass ein menschlicher Betrachter oder eine Vorrichtung mit einer optischen Erfassungseinrichtung in der Lage ist, dass entsprechende Sicherheitsmerkmal zu verifizieren. Hierzu gehören beispielsweise Hologramme, Lasermarkierungen, optisch variable Tinten, Aufdrucke, in den Laminationskörper integrierte Lumineszenzmittel usw., um nur einige aufzuzählen.

Darüber hinaus sind Sicherheitsmerkmale bekannt, die auf äußere Anregung einen bestimmten optischen Effekt zeigen. Neben der reinen Existenz eines bestimmten Sicherheitsmerkmals kann es ebenfalls von Interesse sein, eine in dem Laminationskörper gespeicherte Information durch ein Sicherheitsmerkmal abzusichern, sodass die Echtheit der Information verifiziert werden kann. Insbesondere besteht ein großes Interesse daran, Informationen, die einen Laminationskörper einer Gesamtheit von mehreren gleichartigen Laminationskörpern individualisieren, in ein überprüfbares Sicherheitsmerkmal zu integrieren und/oder durch ein überprüfbares Sicherheitsmerkmal abzusichern.

Sicherheitsmerkmale werden so ausgebildet, dass diese möglichst schwer nachzuahmen oder nachzubilden sind, sodass Fälscher diese möglichst nicht herstellen oder nachahmen können, und sie dennoch einfach und zuverlässig verifiziert werden können.

Hierbei werden Sicherheitsmerkmale danach unterschieden, ob zu deren Verifikation Hilfsmittel benötigt werden oder ob diese durch einen Menschen ohne zusätzliche Hilfsmittel verifiziert werden können. Sicherheitsmerkmale der Kategorie eins können ohne Zuhilfenahme von Werkzeugen oder Hilfsmitteln verifiziert werden. Hierzu gehören beispielsweise Lasermarkierungen, mit Lasermarkierungen ausgebildete Kippbilder wie CLI (changable laser image) oder MLI (multiple laser image) oder auch spezielle Sicherheitsdrucke usw.

Als Kategorie zwei Sicherheitsmerkmale werden solche bezeichnet, zu deren Verifikation Hilfsmittel benötigt werden. Hierunter fallen beispielsweise Sicherheitsmerkmale, welche mit Lumineszenzmittel ausgebildet sind, die nur mit Licht im nicht sichtbaren Wellenlängenbereich anregbar sind, wie auch in einem Mikrochip gespeicherte Informationen, die beispielsweise über ein kontaktlos mit dem Laminationskörper in Wechselwirkung tretendes Lesegerät abgefragt werden können.

Beispielsweise sind moderne Reisepässe und Personalausweise mit einer Schaltungsanordnung, in der Regel in Form eines Mikrochips, ausgebildet, die mit einer in der Regel spiralförmig ausgebildeten Antennenstruktur verbunden ist. Über eine Einstrahlung von elektromagnetischer Strahlung kann in die Antenne Strom induziert werden, mit dem die Schaltungsanordnung bestromt wird. Diese kann beispielsweise eine mit der Antenne verbundene Last gezielt schalten, sodass die von der Antennenstruktur dem elektromagnetischen Feld entnommene Energie abhängig von der Last variiert wird. Diese Änderung kann das Lesegerät, welches die elektromagnetische Strahlung erzeugt, detektieren, sodass die Schaltungsanordnung hierüber Informationen an das Lesegerät übermitteln kann. Darüber hinaus ist die Schaltungsanordnung in der Regel ausgebildet, eine Modulation der elektromagnetischen Strahlung des Lesegeräts zu demodulieren und seinerseits von dem Lesegerät übertragene Informationen zu erfassen und auszuwerten und/oder weiter zu verarbeiten.

Die DE102007015934 A1 beschreibt ein Dokument mit einem Sicherheitsmerkmal und einem optischen Element, wobei das Sicherheitsmerkmal vor dem optischen Element angeordnet ist und das optische Element zur Überprüfung des Sicherheitsmerkmals zwischen zumindest ersten und zweiten optischen Zuständen schaltbar ist, wobei das Sicherheitsmerkmal in nur einem der ersten und zweiten Zustände optisch überprüfbar ist.

Die Präambel von Anspruch 1 bezieht sich auf dieses Dokument.

In der DE102013102003 A1 wird in verschiedenen Ausführungsbeispielen ein Chipkartenmodul bereitgestellt, welches aufweisen kann: einen Chipkartenmodulträger; eine Verdrahtungsstruktur, welche auf dem Chipkartenmodulträger angeordnet ist; einen integrierten Schaltkreis, welcher auf dem Chipkartenmodulträger angeordnet ist und mit der Verdrahtungsstruktur elektrisch gekoppelt ist; eine Chipkartenmodul-Antenne, welche auf dem Chipkartenmodulträger angeordnet ist und mit der Verdrahtungsstruktur elektrisch gekoppelt ist und eine Leuchtvorrichtung, welche auf dem Chipkartenmodulträger angeordnet ist und mit der Verdrahtungsstruktur elektrisch gekoppelt ist.

Die DE102005039320 A1 beschreibt einen kartenförmigen Datenträger mit einem Kartenkörper, auf dem ein graphisches Element dargestellt ist. Der Kartenkörper weist ein Kunststoffmaterial zur Umwandlung von eingestrahltem Licht in Sekundärlicht und zur Weiterleitung des Sekundärlichts innerhalb des Kunststoffmaterials zum graphischen Element oder zu einem Teilbereich des graphischen Elements auf. Der kartenförmige Datenträger zeichnet sich dadurch aus, dass ein durch das Kunststoffmaterial gebildeter Formkörper zur Darstellung des graphischen Elements wenigstens teilweise in wenigstens einer Ausnehmung des Kartenkörpers angeordnet ist und/oder ein lateral ausgedehntes Gebiet aufweist, innerhalb des der Formkörper andere optische Eigenschaften als außerhalb des Gebiets besitzt.

Die US 4,469,725 zeigt eine Laminat-Identifikationskarte, die mindestens zwei Schichten mit unterschiedlicher optischer Durchlässigkeit oder Farbe enthält. Die aneinanderstoßenden Oberflächen dieser Schichten sind mit komplementären, ineinandergreifenden Einprägungen und Ausprägungen versehen. Im Durchlicht ist ein diesen Prägungen entsprechendes Zeichen oder Bild zu sehen, das eine andere Helligkeit oder Farbe als der Rest der Karte hat.

Die DE102011117044A1 zeigt ein Sicherheitselement. Das Sicherheitselement weist eine Sichtseite und eine dieser gegenüberliegende Rückseite auf. Das Sicherheitselement umfasst mindestens eine Leuchtschicht, welche Licht aussenden kann, sowie mindestens eine Maskenschicht, welche bei einer Betrachtung des Sicherheitselements von der Sichtseite her vor der mindestens einen Leuchtschicht angeordnet ist. Die mindestens eine Maskenschicht weist mindestens einen opaken Bereich und mindestens zwei transparente Öffnungen auf. Die mindestens zwei transparenten Öffnungen besitzt einen wesentlich höheren Transmissionsgrad als der mindestens eine opake Bereich in Bezug auf von der mindestens einen Leuchtschicht ausgesendetem bzw. bereitgestelltem Licht, vorzugsweise einen um mindestens 20% höheren Transmissionsgrad, besonders bevorzugt einen um mindestens 50% höheren Transmissionsgrad.

Der Erfindung liegt die technische Aufgabe zugrunde, einen Laminationskörper mit einem verbesserten Sicherheitsmerkmal zu schaffen, welches einfach zu verifizieren ist, und insbesondere geeignet ist, individualisierende Informationen in dem Sicherheitsdokument abzusichern und ein Verfahren für dessen Verifikation anzugeben.

Die Erfindung wird durch einen Laminationskörper mit den Merkmalen des Anspruchs1 und ein Verfahren mit den Merkmalen des Anspruchs 8 gelöst. Vorteilhafte Ausgestaltungen ergeben sich aus den Unteransprüchen.

Der Erfindung liegt die Idee zugrunde, mit einer in einen Laminationskörper integrierten Antennenstruktur mindestens ein Leuchtmittel zu koppeln, welches bei Einstrahlung von elektromagnetischer Strahlung mittels des in die Antennenstruktur induzierten Stroms in einen aktiven Zustand versetzt werden kann, in dem dieses mindestens eine Leuchtmittel Licht emittiert. Dieses Licht wird genutzt, um ein in dem Laminationskörper ausgebildetes Sicherheitsmerkmal zu beleuchten, welches entweder im beleuchteten Zustand oder im nicht beleuchteten Zustand für eine optische Verifikation nicht oder nahezu nicht erfassbar ist und in dem jeweils anderen Zustand erfassbar ist. Dieses Sicherheitsmerkmal ist ferner so ausgebildet, dass es eine den Laminationskörper gegenüber einer Gesamtheit gleichartiger Laminationskörper individualisierende Information, beispielsweise persönliche Daten einer Person, der der Laminationskörper zugeordnet ist, speichert.

Die Verifikation kann somit dadurch erfolgen, dass elektromagnetische Hochfrequenzstrahlung auf den Laminationskörper gerichtet wird, sodass in die Antennenstruktur des Laminationskörpers ein Strom induziert wird, der das hiermit gekoppelte mindestens eine Leuchtmittel des Laminationskörpers in einen aktiven Zustand versetzt, in dem das mindestens eine Leuchtmittel Licht emittiert, und hierdurch ein individualisierendes oder individualisierbares Sicherheitsmerkmal in dem Laminationskörper in einen erfassbaren Zustand versetzt wird oder aus einem erfassbaren Zustand in einen verdeckten Zustand versetzt wird, in dem das individualisierende oder individualisierbare Sicherheitsmerkmal nicht oder nahezu nicht erfassbar ist.

### Definitionen

Als Laminationskörper wird hier ein aus mehreren selbsttragenden Substratschichten in einem Hochtemperatur-Hochdruck-Laminationsverfahren zusammengefügter Körper aufgefasst.

Eine selbsttragende Substratschicht ist eine Schicht, die selbstständig ohne andere Schichten in einem Fertigungsprozess verarbeitet werden kann. Selbsttragende Substratschichten sind insbesondere Kunststoffschichten, können jedoch auch aus Fasermaterial gebildete Schichten wie Papier o. ä. sein. Druckschichten, d. h. gedruckte Schichten, werden nicht als selbsttragende Schichten angesehen, da sie ohne die Schicht, auf die der Druck aufgebracht ist, nicht existieren können.

Ein Leuchtmittel ist eine Einheit, welche in einem bestromten Zustand elektromagnetische Strahlung in Form von Licht emittiert.

Licht ist elektromagnetische Strahlung im infraroten Wellenlängenbereich, im sichtbaren Wellenlängenbereich und/oder im ultravioletten Wellenlängenbereich.

Als optische Eigenschaft wird eine Eigenschaft eines Gegenstands bezeichnet, die eine Absorption, Emission, Remission und/oder Ausbreitung von Licht beeinflussen.

Als optisches Erfassen werden all jene Nachweis- und Erfassungsverfahren bezeichnet, bei denen Licht erfasst oder detektiert wird. Neben dem, was ein durchschnittlicher, d. h. gesunder normalsichtiger menschlicher Betrachter mit seinen Augen erfassen kann, wird auch das als optisches Erfassen bezeichnet, welches mit Messeinrichtungen erfolgt, die Licht detektieren.

Als transparent für eine Wellenlänge oder einen Wellenlängenbereich wird ein Material bezeichnet, wenn man mit Licht dieser Wellenlänge oder dieses Wellenlängenbereichs durch das Material hindurch eine Abbildung gemäß der geometrischen Optik ausführen kann. Dieses bedeutet, dass das Material Licht der Wellenlänge oder des Wellenlängenbereichs nicht diffus streut oder vollständig absorbiert. "Weißes" oder klares Fensterglas ist transparent für Licht im sichtbaren Wellenlängenbereich. Rot eingefärbtes klares Glas ist somit zumindest im roten Wellenlängenbereich transparent. Ist keine Wellenlänge im Zusammenhang mit dem Begriff transparent angegeben, wird davon ausgegangen, dass die Transparenz zumindest für Wellenlängen des sichtbaren Lichts existiert.

Transluzent ist ein Material, wenn es zwar Licht transmittiert, aber hierbei diffus streut.

Als Hochfrequenzstrahlung wird elektromagnetische Strahlung im Bereich Kilohertz bis 1 Terahertz bezeichnet.

Eine LED ist eine Leuchtdiode, welches ein Halbleiterbauelement ist, welches bei Bestromung Licht emittiert. Eine OLED ist eine organische Leuchtdiode, bei der die Leuchtdiode mit einem organischen Halbleitermaterial realisiert ist.

Eine Antennenstruktur ist eine leitende Struktur, welche in der Lage ist, eine elektromagnetische Hochfrequenzstrahlung zu empfangen, insbesondere einem elektromagnetischen Hochfrequenzfeld elektrische Energie zu entziehen. Vorzugsweise sind Antennenstrukturen, in Form von ein oder mehreren Leiterschleifen ausgebildet, in die ein Strom induziert wird, wenn elektromagnetische Hochfrequenzstrahlung durch die Leiterschleifen gestrahlt wird.

Ein elektromagnetisches Hochfrequenzfeld ist ein Feld, in dem eine von null verschiedene Amplitude eines elektrischen Feldvektors im Zeittransienten seine Amplitude ändert, wobei die Änderungsfrequenz eine Hochfrequenz ist. Im Zeittransient kann die Amplitude des elektrischen Feldvektors mehrfach den Wert null, wie jeden anderen auftretenden Wert, annehmen, jedoch nicht konstant null sein oder konstant einen anderen Wert aufweisen. Zumindest im statistischen Mittel muss ein Abstand zwischen Zeitpunkten, zu denen der elektrische Feldvektor den Wert Null oder einen anderen Wert erneut annimmt, in der Größenordnung des Kehrwerts des Doppelten der Frequenz der Hochfrequenzstrahlung liegen.

### Bevorzugte Ausführungsformen

Insbesondere wird ein Laminationskörper geschaffen, welcher umfasst:
eine Antennenstruktur zum Empfangen von elektromagnetischer Hochfrequenzstrahlung, mindestens ein mit der Antennenstruktur gekoppeltes Leuchtmittel, welches mittels eines über die elektromagnetische Hochfrequenzstrahlung in die Antennenstruktur induzierten Stroms in einen aktiven Zustand versetzbar ist, in dem das mindestens eine Leuchtmittel Licht emittiert, wobei das mindestens eine Leuchtmittel in einem passiven Zustand, in dem das mindestens eine Leuchtmittel nicht bestromt wird, kein Licht emittiert,
und einem individualisierenden oder individualisierbaren Sicherheitsmerkmal, welches mit einem Erfassungszustand und einem verdeckten Zustand ausgebildet ist oder ausbildbar ist,
wobei in dem Erfassungszustand eine individualisierende Information des Sicherheitsmerkmals optisch erfassbar ist und
wobei in dem verdeckten Zustand die eine individualisierende Information nicht oder nur schwer optisch erfassbar ist,
wobei das mindestens eine Leuchtmittel so ausgestaltet und angeordnet ist, dass ein Wechsel zwischen dem Erfassungszustand, der auch erfassbarer Zustand genannt wird, und dem verdeckten Zustand bei einem Wechsel von dem passiven Zustand zu dem aktiven Zustand des mindestens einen Leuchtmittels oder umgekehrt eintritt. Der Wechsel zwischen dem Erfassungszustand und dem verdeckten Zustand ist reversibel. Findet der Wechsel von dem verdeckten Zustand in den erfassbaren Zustand bei einem Wechsel von dem passiven Zustand des mindestens einen Leuchtmittels in den aktiven Zustand des mindestens einen Leuchtmittels statt, so findet entsprechend ein Wechsel von dem erfassbaren Zustand zu dem verdeckten Zustand des Sicherheitsmerkmals statt, wenn der Zustand des mindestens einen Leuchtmittels von dem aktiven Zustand in den passiven Zustand stattfindet. Findet hingegen ein Wechsel von dem erfassbaren Zustand in den verdeckten Zustand statt, wenn das mindestens eine Leuchtmittel von dem passiven Zustand in den aktiven Zustand wechselt, so findet ein Wechsel von dem verdeckten Zustand in den erfassbaren Zustand statt, wenn das mindestens eine Leuchtmittel von dem aktiven Zustand in den passiven Zustand wechselt.

Erfindungsgemäß umfasst das Sicherheitsmerkmal Lumineszenzmittel, die mittels des im aktiven Zustand des mindestens einen Leuchtmittels emittierten Lichts zumindest teilweise anregbar sind, wobei die Information während der Lumineszenz der Lumineszenzmittel erfassbar ist. Beispielsweise kann somit die Materialschicht mittels im sichtbaren Wellenlängenbereich nicht erfassbarer, transparenter Tinte bedruckt sein, welche Lumineszenzmittel umfasst, die bei einer seitlichen Beleuchtung oder Hinterleuchtung der Materialschicht luminesziert.

Bei einigen Ausführungsformen ist somit vorgesehen, dass die Materialschicht mit den unterschiedlichen optischen Eigenschaften an den unterschiedlichen Positionen zwischen dem mindestens einen Leuchtmittel und den Lumineszenzmitteln angeordnet ist, die mit von außen auf den Laminationskörper eingestrahltem Licht alle zur Lumineszenz anregbar sind, wobei zumindest ein Bereich der Materialschicht als eine der unterschiedlichen optischen Eigenschaften aufweist, dass der zumindest eine Bereich das Licht des mindestens einen Leuchtmittels absorbiert, und mindestens ein anderer Bereich der Materialschicht als eine andere der unterschiedlichen optischen Eigenschaften aufweist, dass der mindestens eine andere Bereich transparent für das Licht des mindestens einen Leuchtmittels ist, so dass ein Teil der Lumineszenzmittel nicht mittels des Lichts des mindestens einen Leuchtmittels zur Lumineszenz anregbar ist, welcher jedoch bei einer Anregung über eine Einstrahlung von Licht von außen auf den Laminationskörper zur Lumineszenz anregbar ist.

Ferner wird ein Verfahren zum Verifizieren eines Sicherheitselements in einem Laminationskörper geschaffen, welches die Schritte umfasst:
Erzeugen eines elektromagnetischen Hochfrequenzfelds, welches eine Antennenstruktur des Laminationskörpers durchdringt, sodass in der Antennenstruktur ein Strom induziert wird, der mindestens ein Leuchtmittel aktiviert, wobei das mindestens eine aktivierte Leuchtmittel Licht aussendet, wobei mittels des Lichts eine individualisierende, in dem Laminationskörper gespeicherte individualisierende Information eines Sicherheitsmerkmals optisch erfassbar wird oder die zuvor optisch erfassbare individualisierende Information verdeckt wird.

Das Verifikationsverfahren sieht vor, dass der Laminationskörper vor und während des Erzeugens und Einstrahlens der Hochfrequenzstrahlung auf den Laminationskörper optisch erfasst wird und ausgewertet wird, ob ein Unterschied aufgrund des Einstrahlens der Hochfrequenzstrahlung ermittelt wird, der die individualisierende Information codiert, die im aktiven Zustand des mindestens einen Leuchtmittels erfassbar wird oder im aktiven Zustand des mindestens einen Leuchtmittels verdeckt wird, und ein Verifikationsergebnis ausgegeben wird, wobei der Laminationskörper als echt und/oder unverfälscht gekennzeichnet wird, wenn beim Auswerten die ihren Zustand bezüglich der Erfassbarkeit ändernde individualisierende Information festgestellt ist. Hierbei findet eine Anregung zur Lumineszenz über eine Einstrahlung von Licht von außen auf den Laminationskörper während des Erfassens vor dem Einstrahlen der Hochfrequenzstrahlung statt.

Eine solche Auswertung und Erfassung kann in einer Vorrichtung, beispielsweise einem Mobiltelefon mit einer Kamera und einer Nahfeldkommunikationseinrichtung softwareunterstützt ausgeführt werden. Die Verifikationsinformation kann beispielswiese als Signal ausgegeben werden, welches in einer Zugangseinrichtung weiterverarbeitet werden kann und beispielsweise eine Zugangsschleuse entriegelt.

Der Vorteil der Erfindung besteht darin, dass insgesamt ein Sicherheitsmerkmal geschaffen wird, welches eine verdeckte oder verdeckbare individualisierende Information in dem Laminationskörper speichert, welche auf einfache und zuverlässige Weise verifiziert werden kann, in dem eine elektromagnetische Hochfrequenzstrahlung auf den Laminationskörper gerichtet wird. Beispielsweise kann die elektromagnetische Hochfrequenzstrahlung von einem gebräuchlichen Mobiltelefon erzeugt werden, welches eine aktive Nahfeldkommunikationseinrichtung, NFC-Einrichtung, umfasst, wobei NFC für Near Field Communication steht.

Die Antennenstruktur sowie das mindestens eine Leuchtmittel sind vorzugsweise zwischen mindestens zwei der Substratschichten, d. h. im Innern des Laminationskörpers angeordnet. Die Antennenstruktur ist hierbei besonders bevorzugt mittels einer leitfähigen Tinte auf eine der selbsttragenden Substratschichten aufgedruckt, bevor diese mit den weiteren Substratschichten zu dem Laminationskörper zusammengefügt worden ist. Hierdurch sind die Antennenstruktur und das mindestens eine Leuchtmittel zuverlässig vor äußeren Einwirkungen und Manipulation geschützt. Auch das Sicherheitsmerkmal, welches einen verdeckten Zustand und einen erfassbaren Zustand für die darin gespeicherten oder speicherbaren Informationen annehmen kann, ist vorzugsweise im Innern des Laminationskörpers ausgebildet.

Das mindestens eine Leuchtmittel umfasst vorzugsweise eine LED oder eine OLED. So ausgebildete Leuchtmittel sind von ihrer körperlichen Gestalt klein und dennoch in der Lage, mit geringen Strömen, die in die Antennenstruktur mittels einer elektromagnetischen Hochfrequenzstrahlung induzierbar sind, eine hohe Lichtausbeute zu gewährleisten.

Die LED und/oder OLED können so ausgestaltet und ausgewählt werden, dass die Wellenlänge des im aktiven Zustand emittierten Lichts in einem bestimmten Wellenlängenbereich liegt. Es kann sowohl Licht im sichtbaren Wellenlängenbereich als auch alternativ und/oder zusätzlich Licht im ultravioletten Wellenlängenbereich und/oder infraroten Wellenlängenbereich emittiert werden.

Wird von dem mindestens einen Leuchtmittel ausschließlich Licht im infraroten und/oder ultravioletten Wellenlängenbereich emittiert, so ist die Aktivierung des mindestens einen Leuchtmittels selbst durch einen menschlichen Betrachter nicht erfassbar. Durch einen menschlichen Betrachter ist bei diesen Ausführungsformen nur ein beleuchtetes Sicherheitsmerkmal erfassbar, welches eine Wellenlängenkonvertierung bewirkt, wie beispielsweise ein mittels Lumineszenzmitteln ausgebildetes Merkmal. Dem Fachmann ist eine Vielzahl von solchen Lumineszenzmitteln bekannt.

Andere Ausführungsformen können vorsehen, dass das von dem mindestens einen Leuchtmittel emittierte Licht zumindest teilweise oder vollständig im sichtbaren Wellenlängenbereich liegt.

Bei einer Ausführungsform ist vorgesehen, dass das Sicherheitsmerkmal eine Materialschicht umfasst, die an unterschiedlichen Positionen unterschiedliche optische Eigenschaften aufweist und mittels des mindestens einen Leuchtmittels in dessen aktiven Zustand hinterleuchtet oder seitlich beleuchtet ist.

Die Materialschicht kann beispielsweise aus für das Licht des mindestens einen Leuchtmittels transparentem Material ausgebildet sein und an einzelnen Positionen so verändert sein, dass an diesen Stellen das Licht des mindestens einen Leuchtmittels gestreut wird. Dies ist besonders für Ausführungsformen geeignet, bei denen das Licht seitlich in die Materialschicht, also parallel zu einer Oberfläche der Materialschicht, welche parallel zur Oberfläche des Laminationskörpers ausgebildet ist, eingestrahlt wird. Bei anderen Ausführungsformen kann die Materialschicht aus für das Licht des mindestens einen Leuchtmittels opakem Material ausgebildet sein, welches an einigen Positionen für das Licht des mindestens einen Leuchtmittels transparent oder transluzent ist bzw. transparent oder transluzent ausgebildet werden kann. Dies ist besonders für Ausführungsformen vorteilhaft, bei denen die Materialschicht des Sicherheitsmerkmals hinterleuchtet wird, d. h. sich zwischen dem Leuchtmittel und einer Oberseite des Laminationskörpers befindet, über den das Sicherheitsmerkmal optisch erfasst, beispielsweise betrachtet wird.

Die Materialschicht muss keine ursprünglich selbsttragende Schicht gewesen sein, die zu dem Laminationskörper zusammengefügt wurden. Sie kann jedoch eine selbsttragende Substratschicht gewesen sein. Alternativ kann die Materialschicht eine Druckschicht oder jede beliebige andere Schicht sein, die entsprechende Eigenschaften aufweist.

Bei besonders bevorzugten Ausführungsformen ist vorgesehen, dass die unterschiedlichen optischen Eigenschaften über Lasermodifikationen auf oder in der einen Materialschicht ausgebildet sind. Dies bietet den Vorteil, dass die unterschiedlichen optischen Eigenschaften der Materialschicht, mit denen die individualisierende Information gespeichert wird, abschließend als letzter Schritt der Fertigstellung eines als Laminationskörper ausgebildeten Sicherheitsdokuments erfolgen kann.

Der Laminationskörper kann somit ein Sicherheitsdokumentenrohling sein, der über einen letzten Schritt, bei dem die Materialschicht lokal hinsichtlich ihrer optischen Eigenschaften verändert wird, in ein fertiges Sicherheitsdokument überführt wird. Bei anderen Ausführungsformen ist der Laminationskörper ein bereits fertig individualisiertes Sicherheitsdokument.

Die Materialschicht ist bei einer bevorzugten Ausführungsform im Innern des Laminationskörpers ausgebildet. Hierdurch wird ein Schutz gegenüber Manipulationen gewährleistet. Bei der Materialschicht kann es sich auch um eine Druckschicht handeln die lateral strukturiert ist und hierüber die individualisierende Information speichert.

Die Lumineszenzmittel können jedoch auch zusätzlich zu einer Materialschicht, welche an unterschiedlichen Positionen unterschiedliche optische Eigenschaften aufweist, in dem Sicherheitsmerkmal vorgesehen sein. So kann beispielsweise die Materialschicht in einem Teilbereich mit einem für den sichtbaren Wellenlängenbereich transparenten UV oder IR Absorber ausgebildet sein. Auf einer von dem mindestens einen Leuchtmittel abgewandten Seite der Materialschicht ist eine Information mittels im sichtbaren Bereich transparenter Lumineszenzmittel ausgebildet, wobei die durch die Lumineszenzmittel ausgebildete Gesamtinformation teilweise über den UV absorbierenden Bereichen der Materialschicht und zum Teil über den Aussparungen bzw. transparenten Bereichen der Materialschicht ausgebildet sind. Wird das mindestens eine Leuchtmittel von dem passiven Zustand in den aktiven Zustand versetzt, so werden die Teile der mittels der Lumineszenzmittel ausgebildeten Information über die emittierte Lumineszenzstrahlung erfassbar, die sich nicht über den UV bzw. IR absorbierenden Bereichen befindet. Die restlichen mittels der Lumineszenzmittel gedruckten Bestandteile der Gesamtinformation sind hingegen weder im aktiven Zustand noch im passiven Zustand des mindestens einen Leuchtmittels erkennbar. Wird hingegen über die Betrachtungsseite des Laminationskörpers Licht jener Wellenlänge eingestrahlt, welche die Lumineszenz der Lumineszenzmittel anregen kann, wird die Gesamtinformation der mittels der Lumineszenzmittel ausgebildeten Information erfassbar.

Selbst wenn eine Drucktinte, mit der Lumineszenzmittel verdruckt sind, im sichtbaren Wellenlängenbereich nicht transparent ist, ist die individualisierende Information hier dennoch verdeckt gespeichert, da im passiven Zustand nicht ermittelt werden kann, welcher Bestandteil der Gesamtinformation die individualisierende Information darstellt, die im aktivierten Zustand des mindestens einen Leuchtmittels lumineszieren wird.

Strukturierungen in der Materialschicht, die die unterschiedlichen optischen Eigenschaften der Materialschicht bedingen, können, sofern die Materialschicht im sichtbaren Wellenlängenbereich nicht transparent und farblos ist, dadurch verdeckt werden, dass eine vom Betrachter aus hinter der Materialschicht angeordnete Schicht dieselbe Farbe oder eine dunklere Farbe aufweist, sodass die durch die Strukturierung der Materialschicht vorhandenen Kontraste in der Materialschicht vor dem Hintergrund nicht erfassbar oder nahezu nicht erfassbar sind.

Bei einigen Ausführungsformen ist somit vorgesehen, dass die unterschiedlichen optischen Eigenschaften die individualisierende Information speichern.

Bei einigen Ausführungsformen ist somit vorgesehen, dass die eine Materialschicht transparent ist und als eine der unterschiedlichen optischen Eigenschaften im Innern der Materialschicht und/oder an einer Oberfläche der Materialschicht Streuzentren umfasst. Bevorzugt werden im Innern ausgebildete Streuzentren. Diese sind schwerer zu fälschen.

Ein sehr zuverlässig zu verifizierendes Merkmal erhält man bei Ausführungsformen, bei denen mit der Lichtquelle Lichtleitkanäle, die auch als Lichtleiter bezeichnet werden, gekoppelt sind, die Licht zu einer Seitenfläche und/oder Kante des Laminationskörpers führen, so dass ein den Laminationskörper gegenüber gleichartigen Laminationskörpern individualisierendes Lichtmuster an der Seitenfläche und/oder der Kante im aktiven Zustand des mindestens einen Leuchtmittels erfassbar ist. Lichtleitkanäle können auf einfache Weise mit transparentem Material beispielsweise auf transparente und/oder opake Substratschichten vor dem Laminieren aufgedruckt werden. Sie können beispielsweise sowohl zur Oberseite als auch zur Unterseite des Laminationskörpers durch eine jeweils für das Licht des mindestens einen Leuchtmittels opake Schicht verdeckt sein. Besonders bevorzugt sind das mindestens eine Leuchtmittel und die Eintrittsbereiche der Lichtleitkanäle durch für das Licht des mindestens einen Leuchtmittels opakes Material im Innern des Laminationskörpers umschlossen, um einen direkten Lichtaustritt des Lichts des mindestens einen Leuchtmittels aus dem Laminationskörper zu vermeiden.

Alternativ oder zusätzlich können die Lichtleitkanäle mit Streuzentren, beispielsweise in Form von Lumineszenzmitteln ausgebildet sein. In diesem Fall ist auch der Verlauf der beispielsweise auf eine Substratschicht aufgedruckten Lichtleitkanäle im aktiven Zustand des mindestens einen Leuchtmittels über die austretende Streustrahlung und/oder Lumineszenzstrahlung erfassbar. Die individualisierende Information kann in diesem Falle durch die laterale Strukturierung des oder der Lichtleitkanäle erfolgen, die beispielsweise die Form von alphanumerischen Zeichen nachbilden können. Hierbei sind die Leichtleitkanäle nicht durch eine opake Schicht gegenüber der Oberseite des Laminationskörpers verdeckt.

Bei einer solchen Ausführungsform muss das Licht nicht zu einer Seitenkante und/oder Oberfläche geführt sein. Die Lichtleitkanäle müssen in diesem Fall kein Austrittsende an der Oberseite und/oder einer Kante des Laminationskörpers aufweisen.

Weiterbildungen können vorsehen, dass die individualisierenden Informationen selbst mit auf andere Weise in dem Laminationskörper gespeicherten Referenzinformationen verglichen, abgeglichen und/oder plausibilisiert werden. Nur wenn eine oder alle dieser Aktionen anzeigen, dass die Informationen korrekt und/oder unverfälscht sind, wird der Laminationskörper als echt und/oder unverfälscht gekennzeichnet.

Nachfolgend wird die Erfindung unter Bezugnahme auf eine Zeichnung näher erläutert. Hierbei zeigen:
- Fig. 1: eine schematische Teilexplosionsansicht eines als Sicherheitsdokument ausgebildeten Laminationskörpers;
- Fig. 2: eine schematische Teilexplosionsansicht eines weiteren als Sicherheitsdokument ausgebildeten Laminationskörpers; und
- Fig. 3: eine schematische Teilexplosionsansicht noch eines weiteren als Sicherheitsdokument ausgebildeten Laminationskörpers.

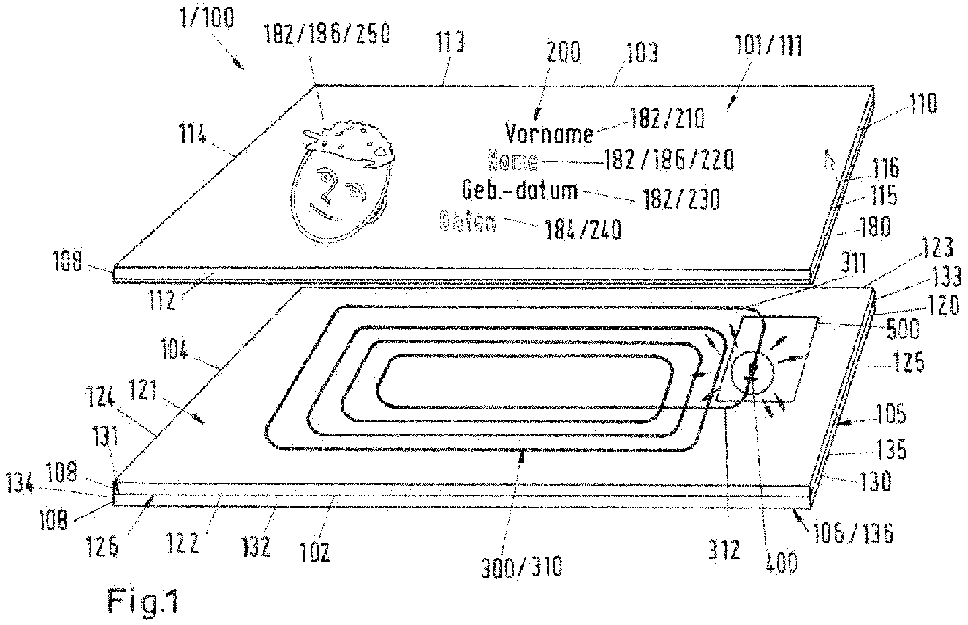

In Fig. 1 ist schematisch als Teilexplosionszeichnung eines als Sicherheitsdokument 1 ausgebildeten Laminationskörpers 100 gezeigt. Dieser weist eine Oberseite 101, eine gegenüberliegende Unterseite 106 sowie eine vordere Seitenkante 102, eine hintere Seitenkante 103, eine linke Seitenkante 104 und eine rechte Seitenkante 105 auf.

Der Laminationskörper 100 ist aus mehreren Substratschichten 108 gebildet, die flächig miteinander verbunden sind.

In der dargestellten Ausführungsform ist der Laminationskörper 100 aus drei Substratschichten 108, einer oberen Substratschicht 110, einer mittleren Substratschicht 120 und einer unteren Substratschicht 130 gebildet. Diese weisen jeweils eine Oberseite 111, 121, 131, eine Unterseite 116, 126, 136, sowie Seitenkanten 112-115, 122-125, 132-135 auf.

Die Anzahl der Substratschichten ist hier nur beispielhaft. Laminationskörper 100 können aus mehr Substratschichten 108 oder weniger Substratschichten gebildet sein, die miteinander zu dem Laminationskörper 100 zusammengefügt sind.

Zwischen zwei der Substratschichten 108, hier zwischen der mittleren Substratschicht 120 und der oberen Substratschicht 110, ist eine Antennenstruktur 300 ausgebildet. Diese ist vorzugsweise als Antennenspule 310 mit einer Windung oder bevorzugter mehreren Windungen, wie im dargestellten Ausführungsbeispiel, ausgebildet. Die Darstellung ist nur schematisch.

Die Antennenstruktur 300 kann aus einem metallischen Draht gebildet sein. Bevorzugt wird die Antennenstruktur jedoch mit einer leitfähigen Tinte oder Zubereitung auf eine Ober- oder Unterseite einer der Substratschichten 108 aufgedruckt, die im fertigen Laminationskörper 100 innenliegend ist, das heißt einer der anderen Substratschichten 108 zugewandt ist.

Im dargestellten Ausführungsbeispiel ist die Antennenstruktur 300 auf die Oberseite 121 der mittleren Substratschicht 120 aufgedruckt. Die Antennenstruktur 300 ist hier als Antennenspule 310 mit drei Windungen ausgebildet. Zwischen Anschlusskontakten 311 und 312 der Antennenspule 310 ist gemeinsam mit einer Schaltungsanordnung 500 oder alleine ein Leuchtmittel 400 angeordnet. Andere Ausführungsformen können mehrere Leuchtmittel umfassen.

Die Antennenspule 310 ist mit der Schaltungsanordnung 500 und/oder dem Leuchtmittel 400 so abgestimmt, dass aus einem elektromagnetischen Hochfrequenzfeld oder einer elektromagnetischen Hochfrequenzstrahlung einer vorgegebenen Frequenz nach Möglichkeit eine resonante Einkopplung von Energie in Form eines induzierten Stroms erfolgt, wenn diese die Antennenstruktur durchdringen.

Besonders bevorzugt wird eine solche elektromagnetische Hochfrequenzstrahlung bzw. ein solches elektromagnetisches Hochfrequenzfeld mittels einer Nahfeldkommunikationseinrichtung erzeugt. Moderne Mobiltelefone, die auch als Smartphones bezeichnet werden, umfassen häufig aktive Nahfeldkommunikationseinrichtungen, die eine elektromagnetische Hochfrequenzstrahlung erzeugen.

Das Leuchtmittel 400 ist mit der Antennenstruktur 300 unmittelbar oder über die Schaltungsanordnung 500 so gekoppelt, dass das Leuchtmittel 400 mittels des in die Antennenstruktur induzierten Stroms bestromt werden kann. Wird das Leuchtmittel 400 bestromt, so emittiert das Leuchtmittel 400 Licht. Das emittierte Licht kann hierbei im sichtbaren Wellenlängenbereich und/oder im UV-Wellenlängenbereich und/oder im IR-Wellenlängenbereich liegen.

Im bestromten Zustand ist das Leuchtmittel 400 aktiv und emittiert Licht. Im nicht bestromten Zustand ist das Leuchtmittel 400 inaktiv oder passiv und emittiert kein Licht.

Das Leuchtmittel 400 ist bevorzugt eine Leuchtdiode (LED) oder eine organische Leuchtdiode (OLED). Diese weisen eine hohe Lichtausbeute bei geringem Strombedarf auf. Die Emissionswellenlänge kann über die Auswahl oder den Aufbau der Leuchtdiode/organischen Leuchtdiode bei der Herstellung gesteuert werden.

Die Schaltungsanordnung 500 kann verschiedene Elemente enthalten, beispielsweise einen Gleichrichter, Elemente zum Glätten des induzierten Stroms, Elemente zum kurzzeitigen (maximal einigen Sekunden) Speichern von elektrischer Energie, z.B. in Form eines Kondensators, aber auch aktive Elemente, die eine Kommunikation gemäß einem Nahfeldkommunikationsstandard oder RFID Standard ausführen können. Ebenso kann die Schaltungsanordnung ausgebildet sein, das Leuchtmittel 400 zu schalten und gegebenenfalls die Lichtemission hinsichtlich der Intensität des emittierten Lichts im zeitlichen Verlauf zu modulieren.

Mit dem Leuchtmittel 400 ist ein Sicherheitsmerkmal gekoppelt, welches einen Erfassungszustand oder erfassbaren Zustand und einen verdeckten Zustand aufweist. Der Wechsel zwischen dem Erfassungszustand und dem verdeckten Zustand, kann über einen Wechsel des Zustands des Leuchtmittels herbeigeführt werden.

Bei einer Ausgestaltung ist die obere Substratschicht 110 transparent. Diese Substratschicht 110 ist vor dem Laminieren an ihrer Unterseite 116 vollflächig so bedruckt, dass eine hierbei gebildete Druckschicht 180 opak ist. Dieses bedeutet, dass ein menschlicher Betrachter, der den Laminationskörper 100 über die Oberseite 101 betrachtet, während die Oberseite 101 des Laminationskörpers 100 mit Licht im sichtbaren Wellenlängenbereich beleuchtet wird, die darunter angeordnete Antennenstruktur 300 und das Leuchtmittel 400 nicht sehen kann.

Die Druckschicht 180 kann ein oder mehrlagig ausgebildet sein.

Einzelne Bestandteile 182 der Druckschicht 180 weisen gegenüber ihrer Umgebung, die auch als lokaler Hintergrund bezeichnet werden kann, einen Farbkontrast auf, so dass diese Bestandteile 182 vor der Umgebung/dem lokalen Hintergrund bei einer Beleuchtung der Oberseite 101 des Laminationskörpers 100 mit sichtbarem Licht für einen menschlichen Betrachter oder eine fotografische Erfassungseinrichtung hinsichtlich ihrer Form und Gestalt abgegrenzt von ihrer Umgebung erfassbar sind. Diese Bestandteile 182 weisen beispielsweise die Form von alphanumerischen Zeichen, Piktogrammen oder die Farbtöne eines Fotos oder Portraitbildes 250 auf. Hierüber ist eine den Laminationskörper 100 gegenüber gleichartigen Laminationskörpern individualisierende Information 200 ausgebildet. Vorzugsweise ist diese Information einer Person zugeordnet, welcher wiederum der Laminationskörper 100 zugeordnet ist. Solche Informationen werden dann als personalisierende Informationen bezeichnet. Die Bestandteile 182 umfassen beispielsweise einen Vornamen 210, einen Namen 220, ein Geburtsdatum 230 und ein Portraitbild 250.

In der Druckschicht 180 ist ein weiterer Bestandteil 184 der individualisierenden Informationen 200 so ausgebildet, dass dieser bei Beleuchtung mit sichtbarem Licht keinen Kontrast gegenüber der Umgebung aufweist, jedoch mit einem Photo-Lumineszenzmittel ausgebildet ist, im Folgenden werden diese verkürzend immer nur als Lumineszenzmittel bezeichnet. Der weitere Bestandteil 184 umfasst hier beispielsweise einen Geburtsort, eine Anschrift usw. was hier mittels des Begriffs Daten 240 exemplarische angegeben ist. Die Lumineszenzmittel sind mittels Lichts im nicht sichtbaren Wellenlängenbereich zu einer Lumineszenz anregbar.

Erfasst man den Laminationskörper 100 von der Oberseite 101, während die Lumineszenz über Einstrahlung von UV-Licht und/oder IR-Licht angeregt ist, so sind Form und Gestalt dieses weiteren Bestandteils 184 der Druckschicht 180 gegenüber der Umgebung erfassbar. Die in der Form und/oder Gestalt gespeicherte Information, die beispielsweise als farbig oder bunt leuchtende alphanumerische Zeichen erfassbar ist, sind somit nur erfassbar, wenn eine Lumineszenzanregung stattfindet, ansonsten ist die in diesem weiteren Bestandteil 184 gespeicherte Information verdeckt.

Das Leuchtmittel 400 der Ausführungsform der Fig. 1 ist somit so ausgebildet, dass es Licht im nicht sichtbaren Wellenlängenbereich emittiert, für welches die opake Farbe zumindest soweit durchlässig ist, dass dieses Licht die Lumineszenzmittel in der Druckschicht 180 anregen kann, sodass der oder die weiteren Bestandteile 184 und die darin gespeicherten Informationen im aktiven Zustand des Leuchtmittels 400 optisch erfassbar sind.

Im dargestellten Ausführungsbeispiel sind somit die individualisierenden "Daten" im passiven Zustand des Leuchtmittels 400 verdeckt.

Bei einer Variante der dargestellten Ausführungsform sind alternativ oder zusätzlich zu den weiteren Bestandteilen 184 der individualisierenden Informationen 200 einzelne Unterbestandteile 186 der einen Kontrast gegenüber der Umgebung aufweisenden Bestandteile 182 auch mit Lumineszenzmitteln ausgebildet. Hierbei sind nur einige Unterbestandteile 186 der gesamten über den Kontrast im sichtbaren Licht erfassbaren Information mit Lumineszenzmitteln ausgebildet. Verschiedene gleichartige Laminationskörper unterscheiden sich außer der Form (z.B. der konkreten Buchstaben) hinsichtlich der Anordnung der Unterbestandteile und/oder der Ausgestaltung, z.B. Farbe des Lumineszenzlichts. Wird nun der Laminationskörper 100 und insbesondere die Antennenstruktur 300 von elektromagnetischer Hochfrequenzstrahlung durchstrahlt und darüber das Leuchtmittel 400 in dem Laminationskörper 100 zur Emission von Licht im nichtsichtbaren Wellenlängenbereich angeregt, so lumineszieren die mit den Lumineszenzmitteln ausgebildeten Unterbestandteile 186 und gegebenenfalls der weitere Bestandteil 184 der Druckschicht 180. Die Anordnung und Ausgestaltung, beispielsweise der Lumineszenzfarben, der Unterbestandteile 186 speichert eine weitere individualisierende Information zusätzlich zu der aufgrund des Kontrasts im sichtbaren Wellenlängenbereichs ohnehin grafisch erfassbaren Information. In der dargestellten Ausführungsform ist beispielsweise eine individualisierende Information dadurch gespeichert, dass der Name 220 und das Portraitbild 250 zusätzlich auch lumineszieren wohingegen der Vorname 210 und das Geburtsdatum 230 auch im aktiven Zustand des Leuchtmittels 400 nicht lumineszieren.

Bei einer anderen Ausführungsform ähnlich zu der nach Fig. 1 sind alle Bestandteile einer individualisierenden Information, die aufgrund des Kontrasts der Bestandteile zur lokalen Umgebung im sichtbaren Licht erfassbar sind, zusätzlich mit Lumineszenzmitteln ausgebildet, die mit Licht im nicht sichtbaren Wellenlängenbereich zur Lumineszenz anregbar sind. Bei einer Anregung mit nicht sichtbarem UV- und/oder IR-Licht luminesziert somit die gesamte Information. Zusätzlich sind jedoch einige der Bestandteile der Information an der von der Oberseite 101 des Laminationskörpers abgewandten Seite mit einem UV- und/oder IR-Absorber versehen, z.B. überdruckt, so dass einzelne Bestandteile der Information von dem Licht des Leuchtmittels nicht zur Lamination angeregt werden können. Die im passiven Zustand des Leuchtmittels verdeckte Information ist im aktiven Zustand des Leuchtmittels in der selektiven Lumineszenz einzelner Bestandteile, d.h. deren Anordnung und Ausgestaltung neben deren Form, d.h. ohne Berücksichtigung der Form, gespeichert und erfassbar. Dieses bedeutet, dass beispielsweise über die Tatsache, dass der Name 220 und nicht der Vorname 210 ein Unterbestandteil 186 ist, der zur Lumineszenz anregbar ist, eine Information gespeichert wird, unabhängig von dem Namen, d.h. den konkreten Buchstaben (welche die Form darstellen) des Namens. Die Ausgestaltung kann beispielsweise über die Farbe der Lumineszenzstrahlung, d.h. die Verwendung oder Auswahl des Lumineszenzmittels, festgelegt werden.

Besonders bevorzugte Ausführungsformen eines Laminationskörpers weisen somit eine den Laminationskörper gegenüber andern Laminationskörpern einer Vielzahl von Laminationskörpern individualisierende Information auf, die bei einer Betrachtung mit sichtbarem Licht, nicht erfassbar ist, jedoch bei einer Anregung mit Licht des Leuchtmittels im sichtbaren Wellenlängenspektrum erfassbar ist.

Gemeinsam ist den zuvor beschriebenen Ausführungsformen, dass diese eine Materialschicht in Form der Druckschicht aufweisen, die an unterschiedlichen Positionen unterschiedliche optische Eigenschaften aufweist, die im Zusammenwirken mit dem Licht des Leuchtmittels das Sicherheitsmerkmal ausbilden, welches einen Erfassungszustand und einen verdeckten Zustand aufweist.

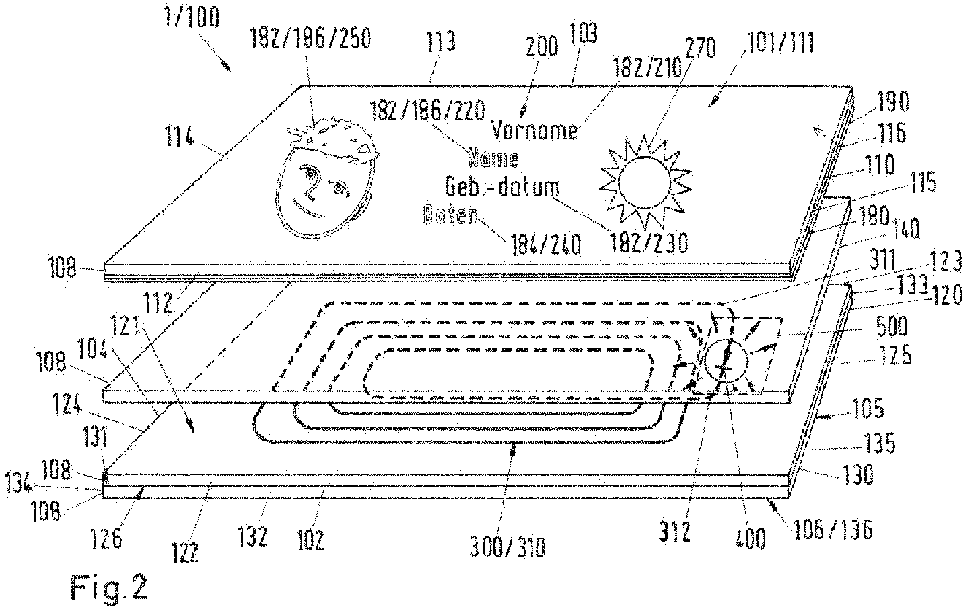

In Fig. 2 ist ein weiterer als Sicherheitsdokument 1 ausgestalteter Laminationskörper 100 gezeigt. Gleiche technische Merkmale sind in allen Figuren mit denselben Bezugszeichen gekennzeichnet.

Bei dieser Ausführungsform ist zwischen der mittleren Substratschicht 120 und der oberen Substratschicht 110 eine lumineszierende Substratschicht 140 angeordnet. Diese lumineszierende Substratschicht 140 wird im aktiven Zustand des Leuchtmittels 400 flächig zum Lumineszieren angeregt.

Die obere Substratschicht 110 ist an ihrer Unterseite 116 erneut mit einer Druckschicht 180 versehen, die individualisierende Bestandteile 182 umfasst, die aufgrund eines Kontrasts gegenüber der Umgebung im sichtbaren Licht erfassbar sind. Teilweise können Unterbestandteile 186 auch zusätzlich lumineszierend ausgebildet sein.

Die Druckfarben weisen jedoch, obwohl sie bei einer Beleuchtung des Laminationskörpers 100 von der Oberseite 101 die Antennenstruktur 300 und das Leuchtmittel 400 verbergen, eine gewisse Transmission für das Lumineszenzlicht der lumineszierenden Substratschicht 140 auf.

Zusätzlich ist auf die von der oberen Substratschicht abgewandte Seite der Druckschicht 180 eine für das Lumineszenzlicht opake Blockierschicht 190 aufgebracht. Diese wird lokal strukturiert, indem diese mit Durchbrechungen versehen wird. Die Durchbrechungen sind unter der transluzenten Druckschicht bei einer Betrachtung über die Oberseite 101 im sichtbaren Licht nicht erfassbar. Wird jedoch das Leuchtmittel aufgrund des mittels der Hochfrequenzstrahlung induzierten Stroms in den aktiven Zustand versetzt, so wird in der lumineszierenden Schicht 140 eine Lumineszenz verursacht. An den Durchbrechungen tritt das Licht durch die ansonsten opake Blockierschicht 190, die beispielsweise eine dünne aufgedampfte Metallschicht ist. Das Muster und/oder die Gestalt der Durchbrechungen ist erfassbar und stellt die individualisierende Information im Erfassungszustand dar.

Die Metallschicht kann auch durch die transluzente Druckschicht mit einem Laser so modifiziert werden, dass die Durchbrechungen entstehen. Der Laminationskörper kann somit ein Rohling sein, der nachträglich individualisierbar ist.

Bei einer alternativen Ausgestaltung ist die Druckschicht 180 opak für das Licht der lumineszierenden Substratschicht. In die opake, nicht transluzente Druckschicht 180 können mikroskopische Löcher eingebracht werden bzw. sind eingebracht. Diese bilden gemeinsam eine individualisierende Information aus. Diese Mikrolöcher mit Durchmessern von 1 µm bis 50 µm, bevorzugter 20 µm, sind nicht oder nahezu nicht erkennbar, insbesondere, wenn die Druckschicht mit dunklen Farben ausgeführt ist und unter der lumineszierenden Substratschicht 140 eine dunkle opake mittlere Substratschicht angeordnet ist oder die lumineszierende Schicht 140 selbst dunkel eingefärbt ist.

Bei einer weiteren alternativen Ausgestaltung ist der Brechungsindex der lumineszierenden Substratschicht größer als die Brechungsindices der umgebenden Materialien, sodass das durch das Leuchtmittel im aktiven Zustand generierte Licht durch Totalreflektion innerhalb der lumineszierenden Schicht bleibt. Durch beispielsweise mittels Lasermaterialbearbeitung eingebrachte mikroskopische Löcher in die lumineszierende Schicht wird der Auftreffwinkel des Lichts innerhalb der lumineszierenden Schicht verändert. Dadurch ist an diesen laserbearbeiteten Stellen die Bedingung für Totalreflektion nicht mehr gegeben und das Licht kann die lumineszierende Substratschicht verlassen, sodass es im aktiven Zustand an dieser Stelle leuchtet. Diese Mikrolöcher mit Durchmessern von 1 µm bis 50 µm, bevorzugter 20 µm, sind im passiven Zustand des Leuchtmittels nicht oder nahezu nicht erkennbar.

Im aktiven Zustand des Leuchtmittels 400 sind die Mikrolöcher und damit gebildete Muster, zum Beispiel in Form von aus Punkten aufgebaute alphanumerische Zeichen, die helle Punkte bilden, gut erkennbar. Bei der dargestellten Ausführungsform sind der Name 220, die Daten 240 und das Portraitbild 250 aufgrund von mit Mikrolöchern ausgebildeten Punktmustern nur im aktiven Zustand des Leuchtmittels 400 erfassbar.

Zusätzlich ist in der Blockierschicht 190 ein weiteres Musterelement 270, beispielsweise in Form einer stilisierten Sonne, ausgebildet, welches im aktiven Zustand des Leuchtmittels erfassbar ist. Durch die transluzente vollflächige Druckschicht 180 werden die Durchbrechung oder Aussparung in der Blockierschicht 190, die das weitere Musterelement bilden, im passiven Zustand des Leuchtmittels 400 verdeckt.

Grundsätzlich können auch in der Druckschicht transparente Bereiche, beispielsweise in Form von Aussparungen vorgesehen sein, die im aktiven Zustand des Leuchtmittels aufgrund der Lumineszenz in der lumineszierenden Schicht leuchten, sofern die Blockierschicht ganz oder an den entsprechenden Stellen fehlt.

Bevorzugt werden Ausführungsformen, bei denen eine opake Schicht erst nach dem Fertigstellen des Laminationskörpers 100 bis auf eine Individualisierung, somit als Sicherheitsdokumentrohling, abschließend lokal verändert wird. Die Änderungen werden vorzugsweise so ausgeführt, dass die Änderungen bei einer Betrachtung über die Oberseite 101 und Beleuchtung der Oberseite 101 mit sichtbarem Licht nicht sichtbar sind.

Bei einer anderen Ausführungsform kann statt der lumineszierenden Substratschicht auch eine streuende Substratschicht vorgesehen sein, die das Licht des Leuchtmittels ohne Wellenlängenänderung streut.

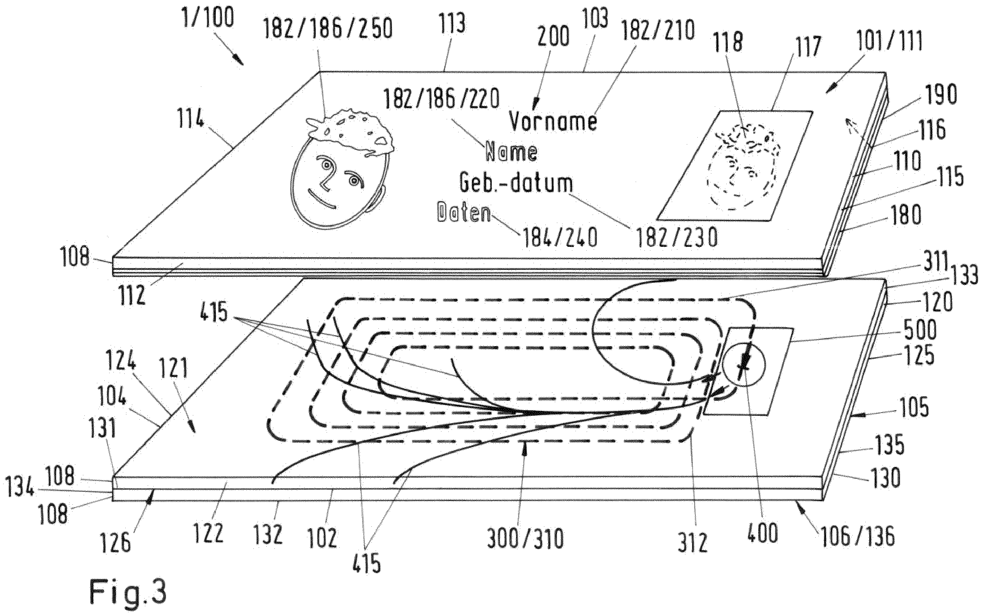

In Figur 3 ist schematisch eine weitere Ausführungsform eines als Sicherheitsdokument 1 ausgebildeten Laminationskörpers 100 als Teilexplosionszeichnung dargestellt.

Erneut ist eine Unterseite 116 der oberen Substratschicht mit einer Druckschicht 180 versehen. Hierbei können einzelne Unterbestandteile 186 der Druckschicht individualisierende Informationen, wie einen Name 220, Daten 240, und ein Portraitbild 250, darstellen und beispielsweise mit Tinten gedruckt sein, die von dem Leuchtmittel 400 anregbare Lumineszenzmittel enthalten. Die Tinte mit denen der Vorname 210 und das Geburtsdatum 230 gedruckt sind, enthalten keine Lumineszenzmittel. Bei dieser Ausführungsform ist ein Fensterbereich 117 ausgebildet, in dem die obere Substratschicht 110 bis auf laserinduzierte Veränderungen 118, die bei einer Betrachtung durch die Oberseite 101 bei einer Beleuchtung der Oberseite 101 mit sichtbarem Licht nicht oder nahezu nicht erkennbar sind, transparent ist.

Die Lichtquelle 400 ist mit dem Fensterabschnitt 117 so lichtleitungstechnisch gekoppelt, dass Licht des Leuchtmittels 400 seitlich in den Fensterabschnitt 117 eingekoppelt wird. Dieses kann beispielsweise über einen oder mehrere mit dem Leuchtmittel 400 gekoppelte Lichtleitkanäle 415 erfolgen. Eine direkte Lichteinstrahlung in den Fensterabschnitt wird beispielsweis mittels der Druckschicht 180 und/oder der Blockierschicht 190 verhindert. Die Lichtleitkanäle 415, die auch als Lichtleiter bezeichnet werden, können beispielsweise aufgedruckt werden, indem transparente Tinten mit unterschiedlichen Brechungsindices verwendet werden. Eine innere Schicht weist einen höheren Brechungsindex als die äußeren Schichten des gedruckten Lichtleitkanals 415 oder Lichtleitkanals auf. Die innere Schicht ist vollständig von der oder den äußeren Schichten umgeben.

Alternativ kann das Leuchtmittel 400 teilweise in die obere Substratschicht 110 seitlich neben dem Fensterabschnitt 117 eingesenkt sein. Zur Oberseite 101 ist das Leuchtmittel 400 auch dann vorzugsweise opak abgedeckt.

Die laserinduzierten Veränderungen 118 bewirken eine Streuung des seitlich in den Fensterabschnitt 117 eingekoppelten Lichts, so dass dieses an Positionen, an denen die Veränderungen des Materials der oberen Substratschicht 110 ausgebildet sind, Lumineszenzlicht durch die Oberfläche 101 des Laminationskörpers austritt. Die Veränderungen sind so als leuchtende Positionen in dem Fensterabschnitt 117 erfassbar. Über deren Anordnung und Gestalt kann so eine individualisierende Information gespeichert werden, die im Erfassungszustand, während Licht des Leuchtmittels 400 in den Fensterabschnitt 117 seitlich eingekoppelt wird, erfassbar ist. Ist das Leuchtmittel im passiven Zustand, d.h. wird das Leuchtmittel 400 nicht bestromt und emittiert kein Licht, so sind die Veränderungen in dem transparenten Fensterabschnitt 117 nicht oder nahezu nicht erfassbar.

Die Lichtleitkanäle 415 können Licht des Leuchtmittels 400 alternativ oder zusätzlich auch zu einzelnen Bereichen der Druckschicht führen und dort Lumineszenzmittel anregen oder Durchbrechungen und/oder Mikroperforationen und/oder Streuzentren in diesen Bereichen hinterleuchten bzw. anleuchten. Ebenso können die Lichtleiter 415 alternativ oder zusätzlich ausgebildet sein, Licht gezielt an Positionen entlang einer der Seitenkanten 102-104 im aktiven Zustand zu leiten, so dass ein Lichtmuster an der oder den entsprechenden Kanten 102-104 entsteht. Dieses Lichtmuster kann individualisierend für einen bestimmten Laminationskörper 100 einer Vielzahl von Laminationskörpern sein. Im passiven Zustand des Leuchtmittels 400 kann das Merkmal nicht oder nur sehr schwer erfasst werden.

Die Ausführungsformen sind beispielhaft mit drei oder vier selbsttragenden Substratschichten gebildet. Es versteht sich für den Fachmann, dass ein Laminationskörper aus einer größeren Anzahl von Substratschichten zusammengefügt sein kann. Hierbei können die Merkmale auf oder in den unterschiedlichen Substratschichten ausgebildet werden. Das Zusammenfügen erfolgt mittels eines zeitgleichen Einwirkens von Druck und Energiezufuhr, so dass aus Kunststoffen gebildete Substratschichten sich zumindest stoffschlüssig miteinander verbinden. Hierbei werden die Antennenstruktur und das Leuchtmittel im Innern des Laminationskörpers eingeschlossen, so dass diese nicht ohne eine Beschädigung des Laminationskörpers manipuliert werden können.

Eine Verifikation der beschriebenen Laminationskörper 100 und/oder hiermit ausgebildeten Sicherheitsdokumente 1 erfolgt, in dem der Laminationskörper 100 optisch erfasst wird. In der Regel wird die Oberseite 101 des Laminationskörpers 100 oder ein Abschnitt der Oberseite 101 optisch erfasst. Dieses erfolgt beispielsweise mittels einer Digitalkamera oder einer anderen optischen Erfassungseinrichtung. Vorzugsweise wird hierbei eine Abbildung erfasst. Anschließend wird eine elektromagnetische Hochfrequenzstrahlung auf den Laminationskörper 100 gerichtet, so dass diese die im Innern des Laminationskörpers 100 ausgebildete Antennenstruktur 300 durchdringt. Hierdurch wird in die Antennenstruktur 300 ein Strom induziert, der das direkt oder über die Schaltungsanordnung 500 mit der Antennenstruktur 300 verbundene mindestens eine Leuchtmittel 400 bestromt und in dessen aktiven Zustand versetzt. In diesem aktiven Zustand emittiert das mindestens eine Leuchtmittel 400 Licht. Mit dem im Innern des Laminationskörpers 100 emittierten Licht wird ein Zustand eines anderen Sicherheitsmerkmals in dem Laminationskörper 100 von einem nicht erfassbaren Zustand in einen erfassbaren Zustand oder von dem erfassbaren Zustand in den nicht erfassbaren Zustand versetzt.

Der Laminationskörper, beispielsweise dessen Oberseite 101, wird während der Einstrahlung des elektromagnetischen Hochfrequenzfelds ein zweites Mal optisch erfasst und überprüft, ob ein Unterschied erfassbar ist, der auf das Aktivieren des Leuchtmittels mittels der elektromagnetischen Hochfrequenzstrahlung zurückzuführen ist. Dieses kann beispielsweise in einer Auswerteschaltung ausgeführt werden, die eine Bildverarbeitungseinrichtung umfasst. Besteht der Unterschied darin, dass beim zweiten Erfassen ein Merkmal erfassbar ist, das beim ersten Erfassen nicht erfassbar war, oder ist beim ersten Erfassen ein Merkmal erfassbar, welches beim zweiten Erfassen nicht mehr erfassbar ist, so wird der Laminationskörper als echt und/oder unverfälscht eingestuft, sofern dieses Merkmal eine individualisierende Information wiedergibt. Beispielsweise stellen persönliche Informationen wie ein Name, ein Vorname, eine Anschrift, biometrische Angaben wie ein Passbild oder Portraitbild, oder andere einen einzelnen Laminationskörper identifizierende Informationen, wie eine Seriennummer etc., eine individualisierende Information dar. Die Verifikationsentscheidung wird ausgegeben, beispielsweise in Form eines Signals, welches zur Steuerung von Zugangsschleusen etc. verwendet werden kann.

Ein Beispiel für ein durch ein aktiviertes Leuchtmittel 400 in den erfassbaren Zustand versetztes Sicherheitsmerkmal stellt ein Aufdruck dar, der mit im sichtbaren Wellenlängenbereich transparenter Druckfarbe ausgebildet ist, die Lumineszenzmittel umfasst, und wobei über eine Anordnung der Lumineszenzmittel beispielsweise eine Information über eine Person gespeichert ist, der der Laminationskörper 100 zugeordnet ist. Mit dem Licht des Leuchtmittels 400 wird dieser Aufdruck zum Lumineszieren angeregt und somit die persönliche Information erfassbar.

Ein Beispiel, bei dem ein Merkmal durch aktives Leuchtmittel 400 in den nicht erfassbaren Zustand versetzt wird liegt vor, wenn beispielsweise eine persönliche Information mittels einer Körperfarbe auf eine lumineszierende Schicht aufgedruckt ist, so dass die Information bei einem Erfassen mit Licht im sichtbaren Wellenlängenbereich einen einzigen Farbeindruck hervorruft und erfassbar ist.

Im Innern des Laminationskörpers befindet sich die lumineszierende Schicht hinter der Druckschicht. Die lumineszierende Schicht ist ausgebildet, dass diese mittels des Lichts des mindestens einen Leuchtmittels zu einer Lumineszenz anregbar ist, die denselben Farbeindruck wie die gedruckte Information hervorruft. Die Information ist bei aktivem Leuchtmittel somit nicht oder nahezu nicht erfassbar.

Alternativ kann die lumineszierende Schicht so ausgebildet sein, dass diese, bezogen auf eine Betrachtung, vor der Druckinformation im Innern des Laminationskörpers angeordnet ist und im sichtbaren Wellenlängenbereich transparent ist, so dass bei einer Betrachtung im passiven Zustand des Leuchtmittels die persönliche gedruckte Information erfassbar ist. Wird hingegen das Leuchtmittel über ein Einstrahlen von elektromagnetischer Hochfrequenzstrahlung aktiviert, wird die lumineszierende Schicht so zu einer Lumineszenz angeregt, dass durch das Lumineszenzlicht hindurch die gedruckte Information nicht oder nahezu nicht erfassbar ist.

Es wird erneut darauf hingewiesen, dass andere Ausführungsformen mehrere Leuchtmittel enthalten können. Diese werden gemeinsam oder, wenn diese über die Schaltungsanordnung in den aktiven Zustand versetzt werden, auch einzeln oder in Gruppen in den aktiven Zustand versetzt, in dem dann das gesamte Sicherheitsmerkmal oder Teile des Sicherheitsmerkmals von dem verdeckten Zustand in den Erfassungszustand versetzt werden oder umgekehrt.

Es versteht sich für den Fachmann, dass hier nur beispielhafte Ausführungsformen beschrieben sind. Die Merkmale der unterschiedlichen Ausführungsformen können beliebig kombiniert werden, um die Erfindung gemäß ihren unterschiedlichen Aspekten auszuführen.

### Bezugszeichenliste

- 1: Sicherheitsdokument
- 100: Laminationskörper
- 101: Oberseite des Laminationskörpers
- 102: vordere Seitenkante des Laminationskörpers
- 103: hintere Seitenkante des Laminationskörpers
- 104: linke Seitenkante des Laminationskörpers
- 105: rechte Seitenkante des Laminationskörpers
- 106: Unterseite des Laminationskörpers
- 108: Substratschicht
- 110: obere Substratschicht
- 111: Oberseite der oberen Substratschicht
- 112: vordere Seitenkante der oberen Substratschicht
- 113: hintere Seitenkante der oberen Substratschicht
- 114: linke Seitenkante der oberen Substratschicht
- 115: rechte Seitenkante der oberen Substratschicht
- 116: Unterseite der oberen Substratschicht
- 117: Fensterabschnitt
- 118: laserinduzierte Veränderungen
- 120: mittlere Substratschicht
- 121: Oberseite der mittleren Substratschicht
- 122: vordere Seitenkante der mittleren Substratschicht
- 123: hintere Seitenkante der mittleren Substratschicht
- 124: linke Seitenkante der mittleren Substratschicht
- 125: rechte Seitenkante der mittleren Substratschicht
- 126: Unterseite der mittleren Substratschicht
- 130: untere Substratschicht
- 131: Oberseite der unteren Substratschicht
- 132: vordere Seitenkante der unteren Substratschicht
- 133: hintere Seitenkante der unteren Substratschicht
- 134: linke Seitenkante der unteren Substratschicht
- 135: rechte Seitenkante der unteren Substratschicht
- 136: Unterseite der unteren Substratschicht
- 140: lumineszierende Substratschicht
- 180: Druckschicht
- 182: Bestandteile der Druckschicht
- 184: weitere Bestandteile der Druckschicht
- 186: Unterbereiche der Druckschicht
- 190: Blockierschicht
- 200: individualisierende Informationen
- 210: Vorname
- 220: Name
- 230: Geburtsdatum
- 240: Daten
- 250: Portraitbild
- 270: weiters Musterelement
- 300: Antennenstruktur
- 310: Spule
- 311, 312: Anschlusskontakte
- 400: Leuchtmittel
- 415: Lichtleiter
- 500: Schaltungsanordnung

## Patentansprüche

1. Laminationskörper (100) umfassend
eine Antennenstruktur (300) zum Empfangen von elektromagnetischer Hochfrequenzstrahlung,
ein mit der Antennenstruktur (300) gekoppeltes mindestens ein Leuchtmittel (400), welches mittels eines über die elektromagnetische Hochfrequenzstrahlung in die Antennenstruktur (300) induzierten Stroms in einen aktiven Zustand versetzbar ist, in dem das mindestens eine Leuchtmittel (400) Licht emittiert, wobei das mindestens eine Leuchtmittel (400) in einem passiven Zustand kein Licht emittiert, und ein individualisierendes oder individualisierbares Sicherheitsmerkmal, welches mit einem Erfassungszustand und einem verdeckten Zustand ausgebildet ist oder ausbildbar ist,
wobei in dem Erfassungszustand eine individualisierende Information des Sicherheitsmerkmals optisch erfassbar ist und
wobei in dem verdeckten Zustand die eine individualisierende Information nicht oder nur schwer optisch erfassbar ist,
wobei
das mindestens eine Leuchtmittel (400) so ausgestaltet und angeordnet ist, dass ein Wechsel zwischen dem verdeckten Zustand und dem Erfassungszustand bei einem Wechsel von dem passiven Zustand zu dem aktiven Zustand des mindestens einen Leuchtmittels (400) oder umgekehrt eintritt, wobei mittels des mindestens einen Leuchtmittels (400) eine Materialschicht hinterleuchtet oder seitlich beleuchtet ist, die an unterschiedlichen Positionen unterschiedliche optische Eigenschaften aufweist, **dadurch gekennzeichnet, dass** die Materialschicht mit den unterschiedlichen optischen Eigenschaften an den unterschiedlichen Positionen zwischen dem mindestens einen Leuchtmittel (400) und den Lumineszenzmitteln angeordnet ist, die mit von außen auf den Laminationskörper (100) eingestrahltem Licht alle zur Lumineszenz anregbar sind, wobei zumindest ein Bereich der Materialschicht als eine der unterschiedlichen optischen Eigenschaften aufweist, dass der zumindest eine Bereich das Licht des mindestens einen Leuchtmittels (400) absorbiert, und mindestens ein anderer Bereich der Materialschicht als eine andere der unterschiedlichen optischen Eigenschaften aufweist, dass der mindestens eine andere Bereich transparent für das Licht des mindestens einen Leuchtmittels (400) ist, so dass ein Teil der Lumineszenzmittel nicht mittels des Lichts des mindestens einen Leuchtmittels (400) zur Lumineszenz anregbar ist, welcher jedoch bei einer Anregung über eine Einstrahlung von Licht von außen auf den Laminationskörper (100) zur Lumineszenz anregbar ist.

2. Laminationskörper (100) nach Anspruch 1, **dadurch gekennzeichnet, dass** das mindestens eine Leuchtmittel (400) eine LED und/oder eine OLED umfasst.

3. Laminationskörper (100) nach einem der vorangehenden Ansprüche, **dadurch gekennzeichnet, dass** die unterschiedlichen optischen Eigenschaften über Lasermodifikationen auf oder in der einen Materialschicht ausgebildet sind.

4. Laminationskörper (100) nach einem der vorangehenden Ansprüche, **dadurch gekennzeichnet, dass** das Sicherheitsmerkmal Lumineszenzmittel umfasst, die mittels des im aktiven Zustand des mindestens einen Leuchtmittels (400) emittierten Lichts zumindest teilweise anregbar sind, wobei die Information während der Lumineszenz des Lumineszenzmittels erfassbar ist.

5. Laminationskörper (100) nach einem der vorangehenden Ansprüche, **dadurch gekennzeichnet, dass** die unterschiedlichen optischen Eigenschaften die individualisierende Information speichern.

6. Laminationskörper (100) nach einem der vorangehenden Ansprüche, **dadurch gekennzeichnet, dass** die eine Materialschicht transparent ist und als eine der unterschiedlichen optischen Eigenschaften im Innern der Materialschicht und/oder an einer Oberfläche der Materialschicht Streuzentren umfasst.

7. Laminationskörper (100) nach einem der vorangehenden Ansprüche, **dadurch gekennzeichnet, dass** mit dem Lichtmittel Lichtleitkanäle gekoppelt sind, die Licht zu einer Seitenfläche und/oder Seitenkante (102-105) des Laminationskörpers (100) führen, so dass ein den Laminationskörper (100) gegenüber gleichartigen Laminationskörpern (100) individualisierendes Lichtmuster an den Seitenflächen und/oder der Seitenkante erfassbar ist.

8. Verfahren zum Verifizieren eines Laminationskörper (100) nach einem der Ansprüche 1 bis 7 umfassend die Schritte:
Erzeugen und Einstrahlen einer elektromagnetischen Hochfrequenzstrahlung, welche eine Antennenstruktur (300) eines Laminationskörpers (100) durchdringt, sodass in der Antennenstruktur (300) ein Strom induziert wird, der mindestens ein Leuchtmittel (400) aktiviert, wobei das mindestens eine aktivierte Leuchtmittel (400) Licht aussendet, wobei mittels des Lichts eine individualisierende, in dem Laminationskörper (100) gespeicherte individuelle Information in einen erfassbaren Zustand versetzt wird oder die zuvor erfassbare individualisierende Information verdeckt wird, **dadurch gekennzeichnet, dass** der Laminationskörper vor und während des Erzeugens und Einstrahlens der Hochfrequenzstrahlung auf den Laminationskörper optisch erfasst wird und ausgewertet wird, ob ein Unterschied aufgrund des Einstrahlens der Hochfrequenzstrahlung ermittelt wird, der die individualisierende Information codiert, die im aktiven Zustand des mindestens einen Leuchtmittels erfassbar wird oder im aktiven Zustand des mindestens einen Leuchtmittels verdeckt wird, und ein Verifikationsergebnis ausgegeben wird, wobei der Laminationskörper als echt und/oder unverfälscht gekennzeichnet wird, wenn beim Auswerten die ihren Zustand bezüglich der Erfassbarkeit ändernde individualisierende Information festgestellt ist, wobei eine Anregung zur Lumineszenz über eine Einstrahlung von Licht von außen auf den Laminationskörper während des Erfassens vor dem Einstrahlen der Hochfrequenzstrahlung stattfindet.

## Claims

1. Laminated body (100) comprising
an antenna structure (300) for receiving high-frequency electromagnetic radiation, at least one light source (400) coupled to the antenna structure (300), wherein the at least one light source (400) can be set to an active state by means of a current induced in the antenna structure (300) via the high-frequency electromagnetic radiation, in which the at least one light source (400) emits light, wherein the at least one light source (400) does not emit light in a passive state, and an individualizing or individualizable security feature, which is or can be designed with a detection state and a concealed state,
wherein, in the detection state, individualizing information of the security feature is optically detectable, and wherein in the concealed state, the individualizing information is not or is only with difficulty optically detectable,
wherein
the at least one light source (400) is designed and arranged such that a change between the concealed state and the detection state occurs when the at least one light source (400) changes from the passive state to the active state or vice versa, wherein the at least one light source (400) backlights or side-lights a material layer which has different optical properties at different positions,
**characterized in that** the material layer with the different optical properties at the different positions is arranged between the at least one light source (400) and the luminescent agents that can all be excited to luminescence by light irradiated onto the laminated body (100) from outside, wherein at least one area of the material layer exhibits as one of the different optical properties that the at least one area absorbs the light of the at least one light source (400), and at least one other area of the material layer exhibits as another one of the optical properties that the at least one other area is transparent to the light of the at least one light source (400), so that a portion of the luminescent agents cannot be stimulated to luminescence by the light from the at least one light source (400), but can be stimulated to luminescence by light irradiated onto the laminated body (100) from outside.

2. Laminated body (100) according to claim 1, **characterized in that** the at least one light source (400) comprises an LED and/or an OLED.

3. Laminated body (100) according to one of the preceding claims, **characterized in that** the different optical properties are formed by laser modifications on or in the one material layer.

4. Laminated body (100) according to one of the preceding claims, **characterized in that** the security feature comprises luminescent agents which can be at least partially excited by the light emitted in the active state of the at least one light source (400), whereby the information can be detected during the luminescence of the luminescent agents.

5. Lamination body (100) according to one of the preceding claims, **characterized in that** the different optical properties store the individualizing information.

6. Laminate body (100) according to one of the preceding claims, **characterized in that** the one material layer is transparent and comprises scattering centers as one of the different optical properties inside the material layer and/or on a surface of the material layer.

7. Laminating body (100) according to one of the preceding claims, **characterized in that** light-conducting channels are coupled to the light source, which channels conduct light to a side surface and/or side edge (102-105) of the laminating body (100), so that a light pattern that distinguishes the laminated body (100) from similar laminated bodies (100) can be detected on the side surfaces and/or the side edge.

8. Method for verifying a laminated body (100) according to one of claims 1 to 7, comprising the steps:
Generating and irradiating high-frequency electromagnetic radiation which penetrates an antenna structure (300) of a laminated body (100) so that a current is induced in the antenna structure (300) which activates at least one light source (400), wherein the at least one activated light source (400) emits light, whereby the light is used to place individualizing, individual information stored in the lamination body (100) into a detectable state or to conceal the previously detectable individualizing information, **characterized in that** the laminated body is optically detected before and during the generation and irradiation of the high-frequency radiation onto the lamination body and wherein it is verified whether a difference is detected due to the irradiation of the high-frequency radiation, which encodes the individualizing information that becomes detectable in the active state of the at least one light source or is concealed in the active state of the at least one light source, and a verification result is output, whereby the laminated body is marked as genuine and/or unaltered if the verification detects the individualizing information that changes its state with regard to detectability, whereby excitation for luminescence takes place via irradiation of light from outside onto the lamination body during the detection before the irradiation of the high-frequency radiation takes place.

## Revendications

1. Corps stratifié (100) comprenant
une structure d'antenne (300) pour recevoir un rayonnement électromagnétique à haute fréquence, au moins une source lumineuse (400) couplée à la structure d'antenne (300), dans lequel la au moins une source lumineuse peut être mise à un état actif au moyen d'un courant induit dans la structure d'antenne (300) via le rayonnement électromagnétique à haute fréquence, dans lequel la au moins une source lumineuse (400) émet de la lumière à l'état actif, dans lequel la au moins une source lumineuse (400) n'émet pas de lumière à un état passif, et un élément de sécurité individualisant ou individualisable, qui est ou peut être conçu avec un état de détection et un état dissimulé, dans lequel, une information individualisante de l'élément de sécurité est détectable optiquement à l'état de détection de l'élément de sécurité, et dans lequel, l'information individualisante n'est pas ou est difficilement détectable optiquement à l'état dissimulé de l'élément de sécurité,
dans lequel
la au moins une source lumineuse (400) est conçue et agencée de telle sorte qu'un changement entre l'état dissimulé et l'état de détection se produit lorsque la au moins une source lumineuse (400) passe de l'état passif à l'état actif ou vice versa, dans lequel la au moins une source lumineuse (400) éclaire par l'arrière ou par le côté une couche de matériau qui présente des propriétés optiques différentes à différentes positions, **caractérisé en ce que** la couche de matériau présentante les différentes propriétés optiques aux différentes positions est disposée entre la au moins une source lumineuse (400) et les matériaux luminescents, qui peuvent tous être excités pour émettre de la luminescence par la lumière irradiée sur le corps stratifié (100) depuis l'extérieur, dans lequel au moins une zone de la couche de matériau présente comme l'une des différentes propriétés optiques, que la au moins une zone absorbe la lumière de la au moins une source lumineuse (400), et dans lequel au moins une autre zone de la couche de matériau présente comme l'une autre des différentes propriétés optiques, que la au moins une autre zone de la couche de matériau est transparente à la lumière de la au moins une source lumineuse (400), de sorte qu'une partie des matériaux luminescents ne peut pas être stimulée pour émettre de la luminescence par la lumière de la au moins une source lumineuse (400), mais peut être stimulée pour émettre de la luminescence lorsqu'elle est stimulée par la lumière irradiée sur le corps stratifié (100) depuis l'extérieur.

2. Corps stratifié (100) selon la revendication 1, **caractérisé en ce que** la au moins une source lumineuse (400) comprend une LED et/ou une OLED.

3. Corps stratifié (100) selon l'une des revendications précédentes, **caractérisé en ce que** les différentes propriétés optiques sont formées par des modifications au laser sur ou dans la couche de matériau.

4. Corps stratifié (100) selon l'une des revendications précédentes, **caractérisé en ce que** l'élément de sécurité comprend des agents luminescents qui peuvent être au moins partiellement excités par la lumière émise à l'état actif de la au moins une source lumineuse (400), dans lequel l'information est détectable pendant la luminescence de l'agent luminescent.

5. Corps stratifié (100) selon l'une des revendications précédentes, **caractérisé en ce que** les différentes propriétés optiques stockent l'information individualisante.

6. Corps stratifié (100) selon l'une des revendications précédentes, **caractérisé en ce que** la couche de matériau est transparente et comprend des centres de diffusion comme l'une des différentes propriétés optiques à l'intérieur de la couche de matériau et/ou sur une surface de la couche de matériau.

7. Corps stratifié (100) selon l'une des revendications précédentes, **caractérisé en ce que** des canaux conducteurs de lumière sont couplés à la source lumineuse, lesquels canaux conduisent la lumière vers une surface latérale et/ou un bord latéral (102-105) du corps stratifié (100), de sorte qu'un motif lumineux qui distingue le corps stratifié (100) d'autres corps stratifiés similaires (100) est détectable sur les surfaces latérales et/ou le bord latéral.

8. Procédé de vérification d'un corps stratifié (100) selon l'une des revendications 1 à 7, comprenant les étapes suivantes :
Générer et irradier un rayonnement électromagnétique à haute fréquence qui pénètre dans une structure d'antenne (300) d'un corps stratifié (100) de manière à induire un courant dans la structure d'antenne (300) qui active au moins une source lumineuse (400), de manière que la au moins une source lumineuse activée (400) émet de la lumière, la lumière étant utilisée pour placer une information individualisante stockée dans le corps stratifié (100) dans un état détectable ou pour dissimuler l'information individualisante précédemment détectable, **caractérisé en ce que** le corps stratifié est capturé optiquement avant et pendant la génération et l'irradiation du rayonnement électromagnétique à haute fréquence sur le corps stratifié et **en ce qu'**il est évalué si une différence est détecté due à l'irradiation du rayonnement électromagnétique à haute fréquence, qui code l'information individuelle devenante détectable à l'état actif de la au moins une source lumineuse ou dissimulée à l'état actif de la au moins une source lumineuse, et **en ce qu'**un résultat de vérification est émis, le corps laminé étant marqué comme authentique et/ou inaltéré si l'évaluation détecte l'information individualisante qui change d'état en termes de détectabilité, dans lequel une excitation pour la luminescence a lieu via l'irradiation de lumière depuis l'extérieur sur le corps laminé pendant la capture optique avant l'irradiation du rayonnement électromagnétique à haute fréquence.
